# EUROPEAN PATENT SPECIFICATION

(11) **EP 1 853 083 B1**
(45) Date of publication and mention of the grant of the patent: **17.07.2019**
(21) Application number: 07107329.0
(22) Date of filing: 02.05.2007
(51) Int. Cl.: H04W 48/18

(54) **System and method for controlling network access**
System und Verfahren zur Steuerung des Netzwerkzugangs
Système et procédé de contrôle d'accès à un réseau

(30) Priority: 02.05.2006 GB 0608588
(43) Date of publication of application: 07.11.2007
(73) Proprietor: Orange SA, London W1U 7DZ (GB)
(72) Inventor: Tutcher, Benomy Orange Personal Communications Services Limited, Bristol BS32 4QJ (GB); Nasser, Ouaouich Orange Personal Communications Services Limited, Bristol BS32 4QJ (GB)
(74) Representative: Cabinet Plasseraud

(56) References cited:
- WO-A-03/071761
- WO-A-2005/099239
- WO-A-2005/114911
- US-A1- 2001 046 860

## Description

### Field of the Invention

The present invention relates to telecommunication systems that can be accessed via an unlicensed-radio access network, and is particularly, but not exclusively, related to controlling the provision of network services based on radio access connection characteristics.

### Background of the Invention

Cellular mobile communication systems such as Global System for Mobile communications (GSM), Universal Mobile Telecommunications Services (UMTS) or Code Division Multiple Access (CDMA) typically consist of a core network portion and a plurality of base stations connected to the core network portion. Each base station is assigned a specific coverage area that defines a so-called cell, and a mobile station located within the coverage area of the cell is able to establish a radio connection with the base station using a predetermined radio frequency within a licensed frequency range. Thus the base station is a connection point between the mobile station and the core network. Unlicensed-radio access networks, that is to say networks that utilise radio technology that does not require an operating licence from a licensing authority, provide additional connection points to cellular mobile communication systems. These additional access networks typically comprise a connection point in the form of an access controller, which, as for the base station, is connected to the core network of the cellular mobile communication systems over the conventional network interface. Thus when viewed from the core network portion, the access controller appears like a base station controller of a licensed radio access network.

Both licensed and unlicensed networks typically provide access to service-specific applications from which mobile stations can receive service in the event that the mobile station has been successfully authenticated by the access controller, and, irrespective of whether the radio link is via a licensed or unlicensed radio access node, access to a given service application is coordinated by functions within the core network portion.

The unlicensed-radio access networks are typically short-range networks (e.g. which use wireless LAN (W-LAN) protocol, Bluetooth or Digital Enhanced Cordless Telecommunications (DECT) protocols). It will therefore be appreciated that a geographical area might contain several tens of such unlicensed-radio access networks, and potentially facilitate access to a correspondingly high number of service applications. This therefore means that, in the absence of a suitable coordination mechanism, the core network can be required to process access requests to several different service application nodes, many of which will be redundant because the mobile station is only connected to one such network at the time of issuing the access request. One way of managing access to service nodes in this situation is to update all subscriber records so as to include details of newly registered unlicensed service applications, leaving it to the network to coordinate service provision. There are problems with this solution, in particular scalability and a proliferation of redundant messages being transmitted through the network. Example of prior art service provisioning control mechanism can be found in WO 03/071761 A. Examples of prior art mechanisms for selecting an appropriate network node to route a call can be found in WO 2005/114911 A and US 2001/046860 A1. Example of prior art event processing system can be found in WO 2005/099239 A.

An object of the present invention is to provide a system for efficiently controlling the provision of network services in an event processing system served by different radio access networks.

### Summary of the Invention

The invention is set out in the appended claims. In accordance with an aspect of the present invention, there is provided event processing apparatus for use in controlling the provision of network services in an event processing system, the event processing system comprising a first radio access node, a second radio access node, and a serving node operable to transceive data to and from the first radio access node and to and from the second radio access node, wherein the first radio access node is associated with a first network and the second radio access node is associated with a second network, different to said first network, and wherein the apparatus is connectable to a plurality of service nodes from which a subscriber is able to receive service during processing of a network event, the service nodes being associated with one of the first or second radio access nodes, the apparatus comprising a function arranged, on receiving a service initiation request message sent by a serving node in a network currently involved in processing of said network event, to identify the radio access node involved in the network event and to selectively control operation of at least some of said plurality of service nodes on the basis of the identified radio access node, whereby to process the network event.

Thus embodiments of the invention provide a means of selecting service nodes corresponding to the network to which the subscriber is connected, thereby effectively filtering out those service applications that are not appropriate to the current connection and reducing the number of messages transmitted during set-up of a network event.

Preferably embodiments of the invention utilise information sent by the radio access network in order to identify the radio access node involved in the network event; suitable information might be the location of the base station/access controller associated with the identified (i.e. connected) radio access node, or the network code associated with the access controller, or other location parameters included within the service initiation request message.

Further features and advantages of the invention will become apparent from the following description of preferred embodiments of the invention, given by way of example only, which is made with reference to the accompanying drawings.

### Brief Description of the Drawings

Figure 1 is a schematic block diagram showing a telecommunications system comprising an event processing system according to an embodiment of the invention;
Figure 2 is a schematic block diagram showing a location identifying functional component according to an embodiment of the invention;
Figure 3 is a schematic timing diagram showing interaction between the components of Figure 1 according to an embodiment of the invention;
Figure 4 is a schematic timing diagram showing interaction between the components of Figure 1 according to a second embodiment of the invention;
Figure 5 is a schematic timing diagram showing interaction between the components of Figure 1 according to a third embodiment of the invention.

In the accompanying figures, those parts and steps that are common between embodiments are allocated the same reference number, whilst those that are particular to a specific embodiment are allocated a distinct reference number.

### Detailed Description of the Invention

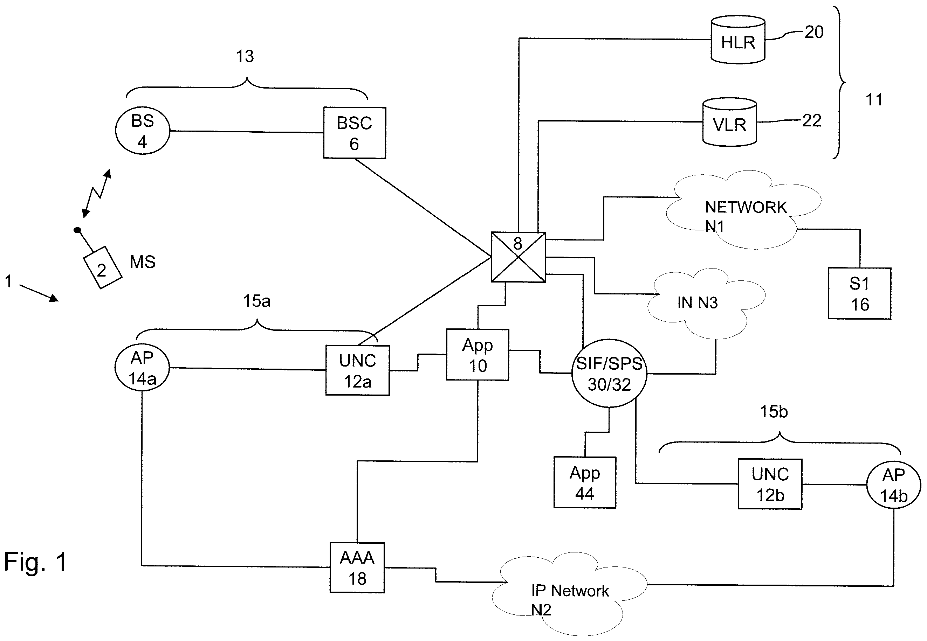

As described above, embodiments of the present invention are concerned with controlling the provision of network services in dependence on radio access technology. The various parts and steps involved in controlling service provision will be described in detail below, but first, and in order to aid understanding of embodiments of the invention, the parts and operation of a conventional mobile network will be presented with reference to Figure 1.

Figure 1 shows a telecommunications system 1 having a core network 11, comprising mobile switching centres (MSC) 8, home location register (HLR) 20 and visitor location register (VLR) 22, and a first, cellular, radio access network 13, comprising a base station controller (BSC) 6 and a base station (BS) 4. These components are well known to those skilled in the art and will not be described in further detail here. Figure 1 also shows the MSC 8 being connected to other mobile and fixed-line networks N1 (e.g. ISDN and PSTN networks) via one or more gateway nodes (not shown) and an intelligent network (IN) N3.

In addition to the GSM radio access network provided by the BS 4 and BSC 6, the telecommunications system 1 includes a plurality of second radio access networks 15a, 15b, each comprising an Unlicensed Network Controller (UNC) 12a, 12b and an Access Point (AP) 14a, 14b. Hereinafter these will be described as an unlicensed-radio access network 15a, 15b; by unlicensed-radio is meant any radio protocol that does not require the operator running the mobile network to have obtained a license from a regulatory body. In general, such unlicensed-radio technologies are low power and thus offer a restricted range compared to licensed mobile radio services. The radio interface associated with the AP 14a, 14b may utilise any suitable unlicensed-radio protocol, for example a wireless LAN (W-LAN) protocol, Bluetooth or Digital Enhanced Cordless Telecommunications (DECT) protocols.

As can be seen from Figure 1, communications via a given access point AP 14a, 14b are controlled by a network controller UNC 12a, 12b, which communicates with the MSC 8 over the GSM standard air interface so as to enable the mobile station 2 to access the GSM network components 8, 20 etc. The unlicensed radio access network 15a, 15b emulates the operation of the BS and BSC 4, 6 such that, when viewed from e.g. MSC 8, it looks like a conventional GSM radio access network.

The interface between the AP 14a, 14b and the network controller UNC 12a, 12b is provided by a packet-switched broadband network, which may be a fixed network. Suitable networks might include those based on ADSL, Ethernet, LMDS, or the like. As also shown in Figure 1, the AP 14a, 14b may serve as a dedicated access point to the IP network N2, via authentication server (AAA) 18. In common configurations the AP 14a, 14b serves as a transparent access point, simply relaying all information at the IP level and above between the mobile station 2 and the network components 12a, 12b, 18. Accordingly, once registered with a given unlicensed radio access network 15a, the mobile station 2 establishes a connection with the UNC 12a or AAA server 18 without recognising the AP 14a as a node in the connection. Similarly the UNC 12a can establish a connection with the mobile station 2 directly.

Turning now to the configuration of the mobile station MS 2, in order to communicate with components of an unlicensed radio access network 15a, 15b, the MS 2 includes firmware and software for sending and receiving IP data to and from IP applications via networks N1 and/or N2. When transmitted via the UNC 12a, 12b, and in order to appear as conventional GSM traffic, the UNC 12a, 12b encapsulates the IP traffic in accordance with Section 6.1.1 entitled "Up CS Domain Signalling Protocol Architecture" of UMA Architecture (Stage 2) R1.0.4 (2005-05-02); the encapsulated data include a location indicator, enabling the MSC 8 and other GSM processing applications to identify the radio access portion (unlicensed or licensed) that conveyed the traffic.

In GSM networks, the identity of a mobile station is checked and its operation and right to access the network are authenticated using various elements within the core network portion, such as the Home Location Register (HLR). In relation to the unlicensed radio access network, it is necessary to check whether or not the mobile station is authorised to access the network and whether the mobile station is authorised to access the core network portion. Various authorisation mechanisms for accessing the unlicensed radio access network exist, such as that described in International patent application having publication number WO2005104592 or that described in the applicant's co-pending British patent application having application number 0604001.8.

Unlike these conventional methods, embodiments of the present invention coordinate requests for services - services that are managed by the core network portion -in dependence on the radio access network from where the requests emanate. More specifically, embodiments of the invention include a Service Interaction Function (SIF) 30, which interacts with the MSC 8 and distributes messages both to UMA service nodes 10, 44 and various intelligent network service nodes within the intelligent network N3 based on the location identifier specifying the radio access portion that conveyed the network service request.

One radio access network might be a publicly accessible unlicensed-radio access network (identified in Figure 1 by reference numeral 15a), another might be a private unlicensed-radio access network (identified in Figure 1 by reference numeral 15b), and another might be a cellular access network; since the respective radio access networks operate independently of one another, each radio access network includes its own particular authentication mechanisms. In the following it is assumed that the mobile station has been suitably authorised for service via whichever radio access network the request for a network service has been received, and that, in the case of the unlicensed-radio access networks 15a, 15b, the associated authorisation data are stored in conjunction with the service nodes corresponding to the authorised unlicensed-radio access network (one of unlicensed-radio access network 15a, 15b). For example, referring to Figure 1, assuming the mobile station 2 to have been authorised for access to the public unlicensed radio access network 15a, details of the authenticated mobile station 2 will be stored by application 10, while if the mobile station 2 has been authorised for access to the public unlicensed radio access network 15b, details of the authenticated mobile station 2 will be stored by application 44.

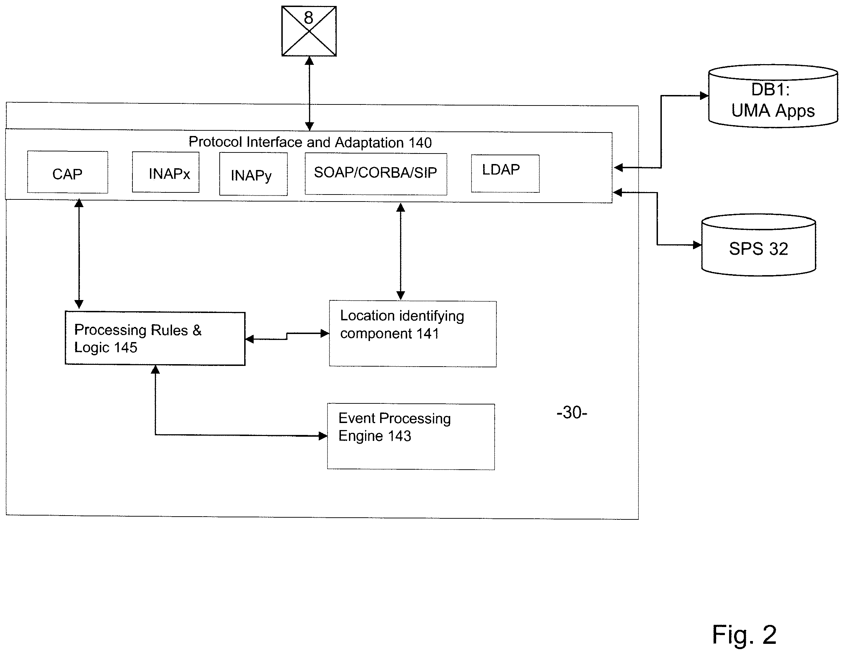

A first embodiment of the SIF 30 will now be described with reference to Figure 2. As will be gathered from a review of Figure 1, the SIF 30 is configured to cooperate with a database SPS 32, which stores a list of services (IN and Open Service Architecture (OSA), Session Initiation Protocol (SIP), IMS (IP Multimedia Subsystems) etc.) and the relationships there between, in terms of network event processing, for all subscribers of the core network 11. The IN and OSA services are preferably keyed in accordance with subscriber identities and service triggers, so that, for any given subscriber identity and trigger, the services available to the subscriber can be selected when a call involving a certain trigger is due to be processed. Further details of the SIF 30 and SPS 32 are provided in applicant's co-pending international patent application having publication number WO2005/099239.

In addition to holding data indicative of the IN and OSA services, the SPS 32 holds data indicative of whether or not the mobile station 2 is UMA enabled. Details of the various UMA applications can be stored in the SPS 32 or in a separate database DB1 when the UMA application registers with an unlicensed-radio access network, and any given entry typically includes data including the identity of the associated unlicensed-radio access network; this database is accessible to the SIF 30 when processing a network event.

Functional details of the SIF 30 not specifically related to embodiments of the invention are set out at the end of the specific description, but suffice to note at this point that the SIF 30 includes a location identifying component 141, which receives data via the interface 140 (these having been received from the MSC 8) and identifies the category of radio access network (e.g. licensed or unlicensed; cellular or short range etc.) to which the mobile station 2 is attached, and can additionally classify radio access networks within their categories. Accordingly the location identifying component 141 is configured so as to categorise the radio layer on the basis of data received from the radio access network; as described above, Section 6.1.1 entitled "Up CS Domain Signalling Protocol Architecture" of UMA Architecture (Stage 2) R1.0.4 (2005-05-02) specifies that the service initiation request will include a location indicator, and this can take the form of a radio access identifier; network identity; and/or location indicator. This could for example be indicated by the location of a central UNC or perhaps by use of a different network indicator in the Country Code (CC) or Network Code (NC) code of the UNC, or other location parameters included within the service initiation request message. The location identifying component 141 is configured to review the content of the service request message for these data. In addition or as an alternative, the location identifying component 141 can include means for determining the authentication mechanism used to authenticate the mobile station 2 to the radio access network, and to categorise the radio access layer on the basis of authentication mechanism (since different authentication mechanisms are used for licensed and unlicensed radio access networks).

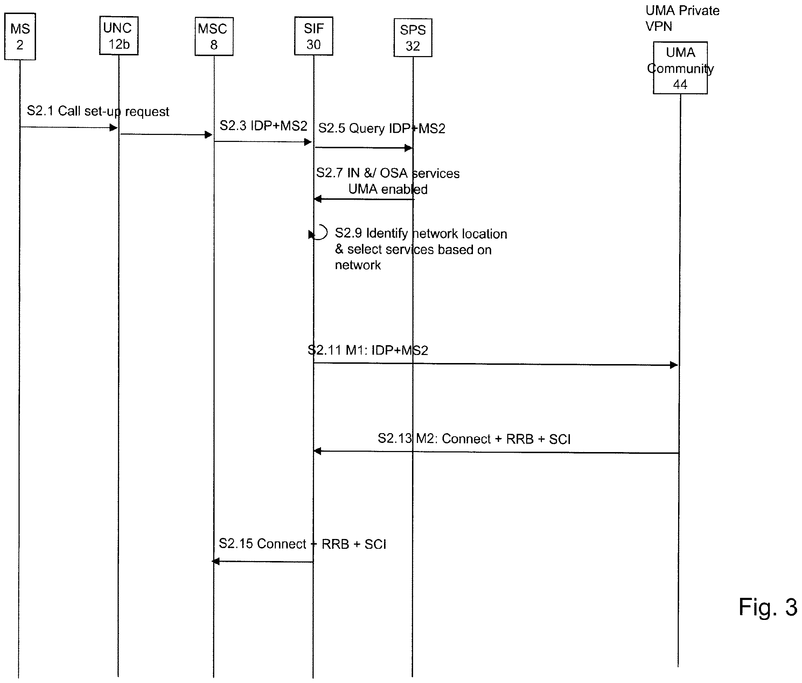

In this first embodiment it is assumed that the mobile station 2 has been authenticated to access the private unlicensed radio access network 15b for a voice call. Turning to Figure 3, at step S2.1 the mobile station 2 issues a call set up request message, which is forwarded by the UNC 12b as a service initiation request message to the switch MSC 8 and from thence to the SIF 30, the service initiation request message comprising call set up parameters including the IDP and the identity of the requesting device MS 2. The SIF 30 then queries the SPS 32 for all services relating to parameters including either or both of the identity of the requesting mobile station 2 and the IDP received from the MSC 8 (step S2.5). The embodiment shown in Figure 3 relates to a situation in which there are no IN or OSA applications that correspond to these query parameters, but where the mobile station 2 is UMA enabled. As described above, the SPS 32 simply includes an entry detailing whether or not the mobile station 2 is UMA enabled, leaving it to the SIF 30 and/or the UMA applications to manage their part in processing of the call, so that the data returned at step S2.7 simply includes a UMA-enabled identifier.

In this embodiment, the location identifying component 141 shown in Figure 2 is arranged to examine the location identifier included in the data sent at step S2.1 - this specifying the radio access portion that conveyed the network service request - and to compare the location identifier with a pre-stored list of radio access portions 15a, 15b, etc. so as to identify which of the pre-registered UMA applications can participate to provide service in the voice call (step S2.9). In the present example this step essentially involves classifying the unlicensed-radio access network as one of public or private, and then selecting that (those) application(s) listed in DB1 that is/are registered in respect of the classified unlicensed-radio access network.

In the example shown in Figure 3, from the location identifier received from the MS 8, the SIF 30 ascertains that the MS 2 is attached to private unlicensed network 15b, and thus identifies that the only UMA application that can be invoked in relation to the requested voice call is UMA private VPN application 44. Accordingly, at step S2.11, the SIF 30 sends a service request message M1 comprising the IDP and identity of the requesting mobile station MS 2, and at step S2.13 the SIF 30 receives a service response message M2 issued by the UMA application 44, the service response message M2 including instructions for use in completing the voice call. The call set-up process then continues in accordance with standard methods.

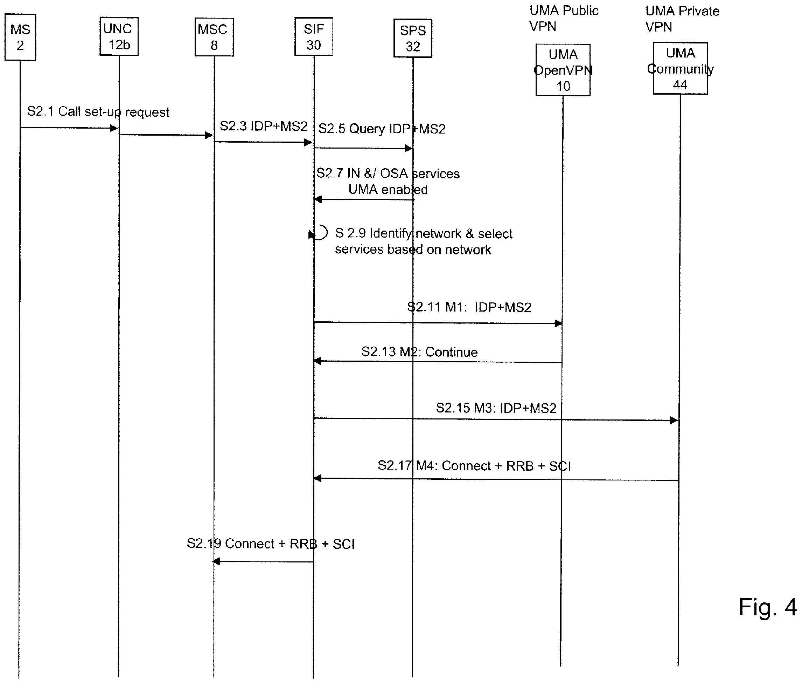

In an alternative embodiment, the location identifying component 141 of the SIF 30 does not classify the type of unlicensed-radio access network, instead leaving it to the registered UMA applications to participate, or otherwise, in the requested network service. An example of this embodiment is shown in Figure 4: the SIF 30 examines the location identifier in response to data received from the MSC 8 at step S2.9, but instead of using the location identifier to classify the unlicensed-radio access network and thence selecting UMA applications corresponding to the classification, the SIF 30 sends service response messages M1, M3 (steps S2.11 & S2.15) to all of the UMA applications registered as capable of providing service (irrespective of their relationship with the unlicensed-radio access network with which the mobile station 2 is connected), leaving it to the applications to participate, or otherwise, in the requested network service. Accordingly, once the SIF 30 has ascertained that the requesting mobile station 2 is UMA enabled (step S2.9), at steps S2.11 and S2.15 messages M1 and M3 are sent to both application 10 (public) and application 44 (private), despite the fact that mobile station 2 is connected to the private unlicensed-radio access network 15b. Since the MS 2 is connected to private network 15b, the public UMA network 15a, and thus public UMA application 10, knows nothing about MS 2; as a result, the list of authenticated mobile stations associated with UMA application 10 does not include identifier data corresponding to mobile station MS 2 and the service response message M2 transmitted at step S2.13 simply comprises a Continue message or a Release message (meaning that any application returning a continue or connect message would take precedence). In this example the mobile station 2 has been authenticated for service with private unlicensed-radio access network 15b, so the private UMA application 44 returns a service response message M4 including instructions for use in completing the call (step S2.17).

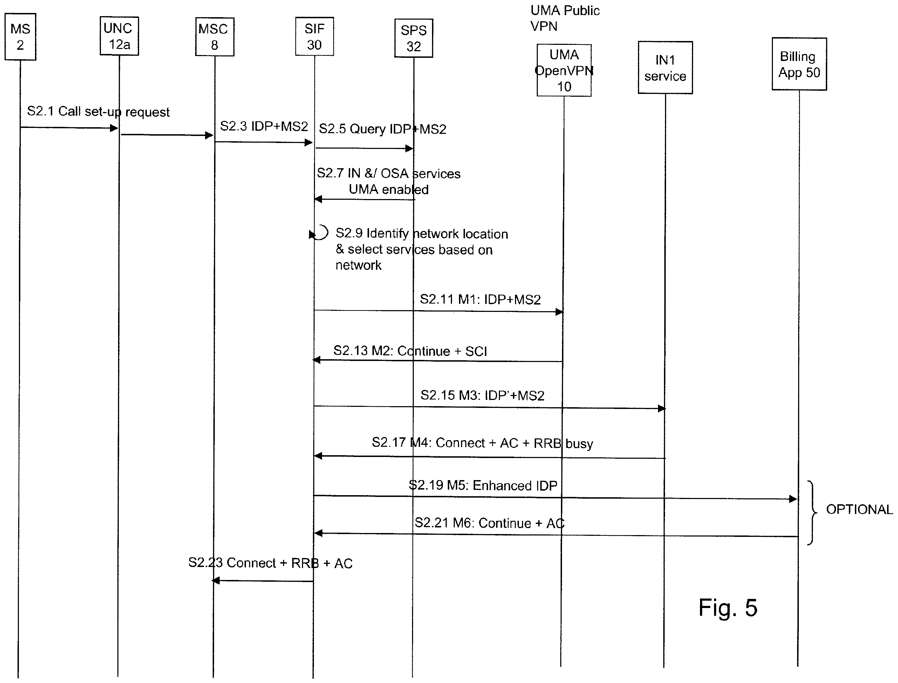

A further example of the functionality of the SIF 30 is shown in Figure 5 for the case in which, in response to receipt of the query parameters IDP, MS2 transmitted at step S2.7, the SPS 32 retrieves data identifying at least one GSM intelligent network service IN1 in addition to data identifying the mobile station MS 2 as being UMA enabled. In this further example it is assumed that the location identifying component of the SIF classifies the type of unlicensed-radio access network as described in relation to the first embodiment, and that the mobile station 2 is identified to have attached to the public UMA radio access network 15a. Accordingly at step S2.11 the SIF 30 transmits a first service request message M1 to the Public UMA application 10 and a second service request message M3 to the intelligent network service IN1. These applications 10, IN1 then respectively transmit service response messages M2, M4 to the SIF 30, which applies various service interaction rules on the basis of the content of the service responses M2, M4 so as to ascertain a connection instruction to send to the MSC 8. In addition to transmitting connection instructions to the MSC 8, the SIF 30 can collect all service-related information involved with processing the network event - the information being derived from service response messages M2 and M4 - and, before progressing the network event, to send a billing request message M5 containing the service-related information to a billing application 50 (step S2.19); when received, the billing application 50 processes the service information and returns a billing response message M6 comprising an event notification such as an ApplyCharging (AC) instruction (step S2.21). As described in applicant's co-pending international patent application PCT/EP2006/050667, the billing request message M5 is preferably embodied as an enhanced IDP message, for which the extensions field of the IDP message is populated with data identifying the various service applications identified by the SIF 30 as being involved in providing the requested network service.

### Additional Details

Whilst in the foregoing it is assumed that the SIF 30 examines the network information included in the call set-up request received from the MSC 8, responsive to data from the SPS 32 indicating that that mobile station 2 is UMA enabled, the SIF 30 could alternatively send service request messages to all UMA applications, irrespective of the radio access network to which the mobile station 2 is connected. Thus in the case where the mobile station 2 is attached to the cellular base station BS 4, if the mobile station 2 is UMA enabled the SIF 30 sends service response messages to whichever intelligent network nodes are listed in respect of the mobile station 2 (as per the data returned by the SPS 32 at step S2.7) and to any UMA applications that have registered. Since the mobile station 2 is not attached to an unlicensed-radio access network node, the mobile station 2 will not have been authenticated by any of the UMA applications, and each UMA application will simply return a service response message comprising a Continue message.

In the second embodiment the SIF 30 does not classify the type of unlicensed radio access network to which the mobile station 2 has attached, with the result that the SIF 30 sends service request messages blindly to all of the UMA applications. As an alternative, and after establishing a pattern for accessing network services based on historical network access data indicating applications from which the mobile station 2 has received service, the SIF 30 could alternatively select UMA applications - e.g. based on contextual data such as time of day.

### Details of SIF 30

The features and functionality of the SIF 30 will now be described in more detail with reference to Figure 2. The event model logic returned from the SPS 32 (typically in the form of rules) is effectively used to control the sequence in which applications are invoked with initial and subsequent messages. Where the output of one service application influences operation of another service application, invocation is synchronous, but if the output from various service applications is simply combined by an event processing engine 143, the service applications are preferably invoked asynchronously so as to improve latency. It can therefore be seen that inter-application processing is managed at the time of processing a call by means of the rules retrieved from the SPS 32. In addition to the SPS 32 returning sequencing rules in respect of OSA triggers such as callEventNotify () and IN triggers such as InitialDP triggers, there are rules for processing event notifications (ERB (IN), RouteRes() (OSA)) applyCharging (AC/ACR (IN), superviseCallReq()/superviseCallRes() (OSA)) messages, temporary call and resource access (ETC/CTR) and any resultant responses therefrom.

The event processing engine 143 is additionally arranged to control operation of multiple service applications that generate conflicting events and actions. Taking a simple example, if multiple service applications return a CONNECT (IN) or routeRequest() (OSA) message, the event processing engine 143 applies various rules in order to identify which of the messages 'wins'; and in another simple example, if a CONNECT/routeRequest() message and a RELEASE (IN) or release() (OSA) message is returned by different service applications, the event processing engine 143 applies various rules to identify which of the two conflicting actions is taken. Essentially, therefore, the outputs are processed in accordance with an appropriate rule retrieved from the SPS 32 associated with the conflicting event and/or action. Events and actions are triggered and coordinated by the SIF 30 independently of the type of application (UMA, OSA, GSM, SIP etc.), and the job of the SIF 30 is to coordinate allocation of resources required by the various services in an application-agnostic manner.

The event processing engine 143 is arranged to handle communication failures, in accordance with the rules retrieved from the SPS 32, dependent on the type of failure. For example, if a first service application aborts, one option is that the whole transaction aborts, whilst another might be that if the first service application succeeds but the second fails, the response from the first should take precedence.

The event processing engine 143 is also configured to monitor for responses within a predetermined time period, wherein, in the event that a service application response or response from the network fails to arrive, the SIF 30 performs one of a plurality of actions. For example, in the case of a service application failing to respond within the specified time period, the SIF could trigger the sending of a Protocol TCAP failure response into the network depending on the associated error rules. The error and timeout rules are preferably embodied as static rules stored and maintained by the SIF 30.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, modifications not described above may also be employed without departing from the scope of the invention, which is defined in the accompanying claims.

## Claims

1. Event processing system (1) for use in controlling the provision of network services, the event processing system comprising an event processing apparatus providing a service interaction function, SIF, (30), a first radio access node (4), a second radio access node (14a;14b), and a serving node (8) operable to transceive data to and from the first radio access node (4) and to and from the second radio access node (14a;14b), wherein the serving node (8) is a mobile switching centre of a core network associated with a licensed network, wherein the first radio access node (4) is associated with a first licensed network (13) and the second radio access node (14a;14b) is associated with a second unlicensed network (15a;15b), different to said first network, and wherein the event processing apparatus is connectable to the serving node and a plurality of service nodes (10; 44) from which a subscriber is able to receive service during processing of a network event, the service nodes (10; 44) being associated with one of the first or second radio access nodes and wherein the SIF is configured to cooperate with a data base, which is configured to store a list of services and the relationships there between in terms of network event processing for all subscribers of the core network, the event processing apparatus (30) comprising a function arranged, on receiving a service initiation request message from the serving node (8) emanating in one of the first or second network currently involved in processing of said network event, to identify the radio access node (14a; 14b) involved in the network event and to choose at least some of said plurality of service nodes (10; 44) to participate in providing the requested service on the basis of the identified radio access node, whereby to process the network event.

2. Event processing system (1) according to claim 1, wherein the first radio access node (4) uses radio access technology different to radio access technology requirements associated with the second radio access node (14a;14b), and the function is arranged to identify the radio access technology associated with the service initiation request message, whereby to identify the radio access node (14a; 14b) involved in the network event.

3. Event processing system (1) according to claim 1 or claim 2, wherein the first radio access node (4) uses an authentication service different to the authentication service associated with the second radio access node (14a;14b) and the function is arranged to identify the authentication service whereby to identify the radio access node (14a; 14b) involved in the network event.

4. Event processing system (1) according to any one of the previous claims, wherein the function is arranged to determine a location identifier from the service initiation request message, whereby to identify the radio access node (14a; 14b) involved in the network event.

5. Event processing system (1) according to claim 4, wherein the function is arranged to determine a network location identifier from the service initiation request message.

6. Event processing system (1) according to claim 4, wherein the function is arranged to determine a geographical location identifier from the service initiation request message.

7. Event processing system (1) according to any one of the preceding claims, wherein the function is arranged to classify the identified radio access node (14a; 14b) and to selectively control operation of the service nodes (10; 44) on the basis of the classification.

8. Event processing system (1) according to claim 7, wherein the classifications include public radio access node and private radio access node, and the function is arranged to operate so as to select service nodes corresponding to the classification.

9. Event processing system (1) according to any one of the preceding claims, wherein the service initiation request message includes data identifying a corresponding service initiation trigger, and the function is arranged to access data identifying service nodes (10; 44) corresponding to said service initiation trigger and to further selectively control operation of the service nodes (10; 44) on the basis thereof.

10. Event processing system (1) according to claim 9, wherein the function is arranged to send a service request message to the selected service nodes (10; 44), at least one said service request message comprising data indicative of one or more service initiation triggers corresponding to said first service initiation request.

11. Event processing system (1) according to any one of the preceding claims, wherein the function is arranged to monitor for a service response message from selected service nodes (10; 44) and to process the network event on the basis of the content of the service response message.

12. Event processing system (1) according to claim 11, wherein at least some of the network services have an unauthenticated state and an authenticated state, and the content includes data indicative of the requested network service being in an unauthenticated state.

13. Event processing system (1) according to any one of the preceding claims, wherein at least one of the service nodes is associated with a plurality of the first or second radio access nodes (4 or 14a;14b).

14. Event processing system (1) according to any one of the preceding claims, wherein at least one of the service nodes (10; 44) is associated with the first radio access node (4) and the second radio access node (14a;14b).

15. The event processing apparatus (30) of an event processing system according to any of the preceding claims.

16. A method of controlling the provision of network services in an event processing system, the event processing system comprising an event processing apparatus providing a service interaction function, SIF, (30), a first radio access node (4), a second radio access node (14a;14b), and a serving node (8) operable to transceive data to and from the first radio access node (4) and to and from the second radio access node (14a;14b), the serving node (8) being a mobile switching centre of a core network associated with a licensed network, the first radio access node (4) being associated with a first licensed network (13) and the second radio access node (14a;14b) being associated with a second unlicensed network (15a;15b), different to said first network, the event processing apparatus being connectable to the serving node and a plurality of service nodes (10; 44) from which a subscriber is able to receive service during processing of a network event, the service nodes (10; 44) being associated with one of the first or second radio access nodes (4, 14a; 14b) and wherein the SIF is configured to cooperate with a data base, which is configured to store a list of services and the relationships there between in terms of network event processing for all subscribers of the core network,
wherein the method comprises, on receiving a service initiation request message from the serving node (8) emanating in a network currently involved in processing of said network event, the following steps performed by the event processing apparatus:
identifying the radio access node (14a; 14b) involved in the network event; and
choose at least some of said plurality of service nodes (10; 44) to participate in providing the requested service on the basis of the identified radio access node (14a; 14b), whereby to process the network event.

17. A method according to claim 16, including determining a location identifier from the service initiation request message, whereby to identify the radio access node (14a; 14b) involved in the network event.

18. A method according to claim 16 or claim 17, including sending a service request message to the selected service nodes (10; 44), at least one said service request message comprising data indicative of one or more service initiation triggers corresponding to said first service initiation request.

19. A method according to any one of claim 16 to claim 18, including monitoring for service response messages from the selected service nodes (10; 44) and processing the network event on the basis of the content of the service response messages.

20. A method according to claim 19, in which at least some of the network services have an unauthenticated state and an authenticated state, the method including analysing said content for data indicative of the requested network service being in an authenticated state in respect of a given selected service node (10; 44), and, responsive thereto, excluding said selected service node (10; 44) from the requested network event.

## Patentansprüche

1. Ereignisverarbeitungssystem (1) zur Verwendung beim Steuern der Bereitstellung von Netzwerkdiensten, wobei das Ereignisverarbeitungssystem eine Ereignisverarbeitungsvorrichtung umfasst, die eine Dienstinteraktionsfunktion, SIF, (30), einen ersten Funkzugangsknoten (4), einen zweiten Funkzugangsknoten (14a; 14b) und einen Andienknoten (8), der betreibbar ist zum Sendeempfangen von Daten zu und von dem ersten Funkzugangsknoten (4) und zu und von dem zweiten Funkzugangsknoten (14a; 14b), bereitstellt, wobei der Andienknoten (8) ein Mobilvermittlungszentrum eines Kernnetzwerks ist, das mit einem lizensierten Netzwerk verknüpft ist, wobei der erste Funkzugangsknoten (4) mit einem ersten lizensierten Netzwerk (13) verknüpft ist und der zweite Funkzugangsknoten (14a; 14b) mit einem zweiten unlizensierten Netzwerk (15a; 15b) verknüpft ist, das sich von dem ersten Netzwerk unterscheidet, und wobei die Ereignisverarbeitungsvorrichtung verbindbar ist mit dem Andienknoten und mehreren Dienstknoten (10; 44), von denen ein Teilnehmer in der Lage ist, während Verarbeitung eines Netzwerkereignisses einen Dienst zu empfangen, wobei die Dienstknoten (10; 44) mit einem des ersten oder des zweiten Funkzugangsknotens verknüpft sind und wobei die SIF ausgelegt ist zum Zusammenwirken mit einer Datenbank, welche ausgelegt ist zum Speichern einer Liste von Diensten und der Beziehungen zwischen diesen hinsichtlich Netzwerkereignisverarbeitung für alle Teilnehmer des Kernnetzwerks, wobei die Ereignisverarbeitungsvorrichtung (30) eine Funktion umfasst, die eingerichtet ist, bei Empfang einer Dienstinitiierungsanfragenachricht von dem Andienknoten (8), die von dem ersten oder dem zweiten Netzwerk ausgeht, das aktuell beim Verarbeiten des Netzwerkereignisses involviert ist, zum Identifizieren des beim Verarbeiten des Netzwerkereignisses involvierten Funkzugangsknotens (14a; 14b) und zum Wählen von mindestens einigen der mehreren Dienstknoten (10; 44), um am Bereitstellen des angefragten Dienstes auf der Grundlage des identifizierten Funkzugangsknotens teilzunehmen, wodurch das Netzwerkereignis verarbeitet wird.

2. Ereignisverarbeitungssystem (1) nach Anspruch 1, wobei der erste Funkzugangsknoten (4) eine Funkzugangstechnologie verwendet, die sich von Funkzugangstechnologieanforderungen, die mit dem zweiten Funkzugangsknoten (14a; 14b) verknüpft sind, unterscheidet, und die Funktion eingerichtet ist zum Identifizieren der Funkzugangstechnologie, die mit der Dienstinitiierungsanfragenachricht verknüpft ist, wodurch der bei dem Netzwerkereignis involvierte Funkzugangsknoten (14a; 14b) identifiziert wird.

3. Ereignisverarbeitungssystem (1) nach Anspruch 1 oder 2, wobei der erste Funkzugangsknoten (4) einen Authentifizierungsdienst verwendet, der sich von dem Authentifizierungsdienst, der mit dem zweiten Funkzugangsknoten (14a; 14b) verknüpft ist, unterscheidet, und die Funktion eingerichtet ist zum Identifizieren des Authentifizierungsdienstes, wodurch der bei dem Netzwerkereignis involvierte Funkzugangsknoten (14a; 14b) identifiziert wird.

4. Ereignisverarbeitungssystem (1) nach einem der vorhergehenden Ansprüche, wobei die Funktion eingerichtet ist zum Bestimmen einer Ortskennung aus der Dienstinitiierungsanfragenachricht, wodurch der bei dem Netzwerkereignis involvierte Funkzugangsknoten (14a; 14b) identifiziert wird.

5. Ereignisverarbeitungssystem (1) nach Anspruch 4, wobei die Funktion eingerichtet ist zum Bestimmen einer Netzwerkortskennung aus der Dienstinitiierungsanfragenachricht.

6. Ereignisverarbeitungssystem (1) nach Anspruch 4, wobei die Funktion eingerichtet ist zum Bestimmen einer geographischen Ortskennung aus der Dienstinitiierungsanfragenachricht.

7. Ereignisverarbeitungssystem (1) nach einem der vorhergehenden Ansprüche, wobei die Funktion eingerichtet ist zum Klassifizieren des identifizierten Funkzugangsknotens (14a; 14b) und zum selektiven Steuern des Betriebs der Dienstknoten (10; 44) auf der Grundlage der Klassifikation.

8. Ereignisverarbeitungssystem (1) nach Anspruch 7, wobei die Klassifikationen einen öffentlichen Funkzugangsknoten und einen privaten Funkzugangsknoten beinhalten, und die Funktion eingerichtet ist zum Betrieb, um der Klassifikation entsprechende Dienstknoten auszuwählen.

9. Ereignisverarbeitungssystem (1) nach einem der vorhergehenden Ansprüche, wobei die Dienstinitiierungsanfragenachricht Daten beinhaltet, die einen entsprechenden Dienstinitiierungsauslöser identifizieren, und die Funktion eingerichtet ist zum Zugreifen auf Daten, die Dienstknoten (10; 44) identifizieren, die dem Dienstinitiierungsauslöser entsprechen, und darauf basierend ferner zum selektiven Steuern des Betriebs der Dienstknoten (10; 44).

10. Ereignisverarbeitungssystem (1) nach Anspruch 9, wobei die Funktion eingerichtet ist zum Senden einer Dienstanfragenachricht an die ausgewählten Dienstknoten (10; 44), wobei mindestens eine Dienstanfragenachricht Daten umfasst, die einen oder mehrere Dienstinitiierungsauslöser anzeigen, die der ersten Dienstanfragenachricht entsprechen.

11. Ereignisverarbeitungssystem (1) nach einem der vorhergehenden Ansprüche, wobei die Funktion eingerichtet ist zum Überwachen hinsichtlich einer Dienstantwortnachricht von ausgewählten Dienstknoten (10; 44) und zum Verarbeiten des Netzwerkereignisses auf der Grundlage des Inhalts der Dienstantwortnachricht.

12. Ereignisverarbeitungssystem (1) nach Anspruch 11, wobei zumindest einige der Netzwerkdienste einen nichtauthentifizierten Zustand und einen authentifizierten Zustand aufweisen und der Inhalt Daten beinhaltet, die den angefragten Netzwerkdienst, der sich in einem nichtauthentifizierten Zustand befindet, angeben.

13. Ereignisverarbeitungssystem (1) nach einem der vorhergehenden Ansprüche, wobei mindestens einer der Dienstknoten mit mehreren des ersten und des zweiten Funkzugangsknotens (4 oder 14a; 14b) verknüpft ist.

14. Ereignisverarbeitungssystem (1) nach einem der vorhergehenden Ansprüche, wobei mindestens einer der Dienstknoten (10; 44) mit dem ersten Funkzugangsknoten (4) und dem zweiten Funkzugangsknoten (14a; 14b) verknüpft ist.

15. Ereignisverarbeitungssystem (30) eines Ereignisverarbeitungssystems nach einem der vorhergehenden Ansprüche.

16. Verfahren zum Steuern der Bereitstellung von Netzwerkdiensten in einem Ereignisverarbeitungssystem, wobei das Ereignisverarbeitungssystem eine Ereignisverarbeitungsvorrichtung umfasst, die eine Dienstinteraktionsfunktion, SIF, (30), einen ersten Funkzugangsknoten (4), einen zweiten Funkzugangsknoten (14a; 14b) und einen Andienknoten (8), der betreibbar ist zum Sendeempfangen von Daten zu und von dem ersten Funkzugangsknoten (4) und zu und von dem zweiten Funkzugangsknoten (14a; 14b), bereitstellt, wobei der Andienknoten (8) ein Mobilvermittlungszentrum eines Kernnetzwerks ist, das mit einem lizensierten Netzwerk verknüpft ist, wobei der erste Funkzugangsknoten (4) mit einem ersten lizensierten Netzwerk (13) verknüpft ist und der zweite Funkzugangsknoten (14a; 14b) mit einem zweiten unlizensierten Netzwerk (15a; 15b) verknüpft ist, das sich von dem ersten Netzwerk unterscheidet, wobei die Ereignisverarbeitungsvorrichtung verbindbar ist mit dem Andienknoten und mehreren Dienstknoten (10; 44), von denen ein Teilnehmer in der Lage ist, während der Verarbeitung eines Netzwerkereignisses einen Dienst zu empfangen, wobei die Dienstknoten (10; 44) mit einem des ersten oder des zweiten Funkzugangsknotens (4, 14a; 14b) verknüpft sind und wobei die SIF ausgelegt ist zum Zusammenwirken mit einer Datenbank, welche ausgelegt ist zum Speichern einer Liste von Diensten und der Beziehungen zwischen diesen hinsichtlich Netzwerkereignisverarbeitung für alle Teilnehmer des Kernnetzwerks,
wobei das Verfahren bei Empfang einer Dienstinitiierungsanfragenachricht von dem Andienknoten (8), die von einem Netzwerk ausgeht, das aktuell beim Verarbeiten des Netzwerkereignisses involviert ist, die folgenden von der Ereignisverarbeitungsvorrichtung durchgeführten Schritte umfasst:
Identifizieren des bei dem Netzwerkereignis involvierten Funkzugangsknotens (14a; 14b); und
Wählen von mindestens einigen der mehreren Dienstknoten (10; 44), um am Bereitstellen des angefragten Dienstes auf der Grundlage des identifizierten Funkzugangsknotens (14a; 14b) teilzunehmen, wodurch das Netzwerkereignis verarbeitet wird.

17. Verfahren nach Anspruch 16, beinhaltend Bestimmen einer Ortskennung aus der Dienstinitiierungsanfragenachricht, wodurch der bei dem Netzwerkereignis involvierte Funkzugangsknoten (14a; 14b) identifiziert wird.

18. Verfahren nach Anspruch 16 oder 17, beinhaltend Senden einer Dienstanfragenachricht an die ausgewählten Dienstknoten (10; 44), wobei mindestens eine Dienstanfragenachricht Daten umfasst, die einen oder mehrere Dienstinitiierungsauslöser anzeigen, die der ersten Dienstanfragenachricht entsprechen.

19. Verfahren nach einem der Ansprüche 16 bis 18, beinhaltend Überwachen hinsichtlich Dienstantwortnachrichten von den ausgewählten Dienstknoten (10; 44) und Verarbeiten des Netzwerkereignisses auf der Grundlage des Inhalts der Dienstantwortnachrichten.

20. Verfahren nach Anspruch 19, bei dem zumindest einige der Netzwerkdienste einen nichtauthentifizierten Zustand und einen authentifizierten Zustand aufweisen, wobei das Verfahren Analysieren des Inhalts auf Daten, die den angefragten Netzwerkdienst, der sich hinsichtlich eines gegebenen ausgewählten Dienstknotens (10; 44) in einem nichtauthentifizierten Zustand befindet, angeben, und als Reaktion darauf Ausschließen des ausgewählten Dienstknotens (10; 44) von dem angefragten Netzwerkereignis, beinhaltet.

## Revendications

1. Système de traitement d'événements (1) destiné à être utilisé pour contrôler la fourniture de services en réseau, le système de traitement d'événements comprenant un appareil de traitement d'événements fournissant une fonction d'interaction de services, SIF (service interaction function) (30), un premier noeud d'accès radio (4), un second noeud d'accès radio (14a ; 14b) et un noeud de desserte (8) pouvant fonctionner pour transmettre des données vers et depuis le premier noeud d'accès radio (4) et vers et depuis le second noeud d'accès radio (14a ; 14b), dans lequel le noeud de desserte (8) est un centre de commutation mobile d'un réseau central associé à un réseau sous licence, dans lequel le premier noeud d'accès radio (4) est associé à un premier réseau sous licence (13) et le second noeud d'accès radio (14a ; 14b) est associé à un second réseau sans licence (15a ; 15b), différent dudit premier réseau, et dans lequel l'appareil de traitement d'événements peut être connecté au noeud de desserte et à une pluralité de noeuds de service (10 ; 44) à partir desquels un abonné peut recevoir un service pendant le traitement d'un événement de réseau, les noeuds de service (10 ; 44) étant associés à l'un des premier et second noeuds d'accès radio et dans lequel la SIF est configurée pour coopérer avec une base de données configurée pour stocker une liste de services et les relations entre ceux-ci en termes de traitement des événements de réseau pour tous les abonnés du réseau central, le dispositif de traitement d'événements (30) comprenant une fonction conçue lors de la réception d'un message de demande de lancement du service du noeud de desserte (8) émanant d'un des premier et second réseaux actuellement impliqué dans le traitement dudit événement de réseau, pour identifier le noeud d'accès radio (14a ; 14b) impliqué dans l'événement de réseau et choisir au moins certains noeuds de ladite pluralité de noeuds de service (10 ; 44) pour participer à la fourniture du service demandé en fonction du noeud d'accès radio identifié, de manière à traiter l'événement de réseau.

2. Système de traitement d'événements (1) selon la revendication 1, dans lequel le premier noeud d'accès radio (4) utilise une technologie d'accès radio différente des exigences de technologie d'accès radio associées au second noeud d'accès radio (14a ; 14b), et la fonction est conçue pour identifier la technologie d'accès radio associée au message de demande de lancement du service, de manière à identifier le noeud d'accès radio (14a ; 14b) impliqué dans l'événement de réseau.

3. Système de traitement d'événements (1) selon la revendication 1 ou la revendication 2, dans lequel le premier noeud d'accès radio (4) utilise un service d'authentification différent du service d'authentification associé au second noeud d'accès radio (14a ; 14b) et la fonction est conçue pour identifier le service d'authentification de manière à identifier le noeud d'accès radio (14a ; 14b) impliqué dans l'événement de réseau.

4. Système de traitement d'événements (1) selon l'une quelconque des revendications précédentes, dans lequel la fonction est conçue pour déterminer un identificateur d'emplacement à partir du message de demande de lancement du service, de manière à identifier le noeud d'accès radio (14a ; 14b) impliqué dans l'événement de réseau.

5. Système de traitement d'événements (1) selon la revendication 4, dans lequel la fonction est conçue pour déterminer un identificateur d'emplacement du réseau à partir du message de demande de lancement du service.

6. Système de traitement d'événements (1) selon la revendication 4, dans lequel la fonction est conçue pour déterminer un identificateur d'emplacement géographique à partir du message de demande de lancement du service.

7. Système de traitement d'événements (1) selon l'une quelconque des revendications précédentes, dans lequel la fonction est conçue pour classifier le noeud d'accès radio identifié (14a ; 14b) et pour contrôler sélectivement le fonctionnement des noeuds de service (10 ; 44) en fonction de la classification.

8. Système de traitement d'événements (1) selon la revendication 7, dans lequel les classifications comprennent un noeud d'accès radio public et un noeud d'accès radio privé, et la fonction est conçue pour fonctionner de manière à sélectionner des noeuds de service correspondant à la classification.

9. Système de traitement d'événements (1) selon l'une quelconque des revendications précédentes, dans lequel le message de demande de lancement du service comprend des données identifiant un déclencheur de lancement du service correspondant, et la fonction est agencée pour accéder aux noeuds de service d'identification de données (10 ; 44) correspondant audit déclencheur de lancement du service et pour contrôler en outre de manière sélective le fonctionnement des noeuds de service (10 ; 44) sur cette base.

10. Système de traitement d'événements (1) selon la revendication 9, dans lequel la fonction est conçue pour envoyer un message de demande de service aux noeuds de service sélectionnés (10 ; 44), au moins un dit message de demande de service comprenant des données indiquant un ou plusieurs déclencheurs de lancement du service correspondant à ladite première demande de lancement du service.

11. Système de traitement d'événements (1) selon l'une quelconque des revendications précédentes, dans lequel la fonction est agencée pour surveiller un message de réponse du service provenant de noeuds de service sélectionnés (10 ; 44) et pour traiter l'événement de réseau sur la base du contenu du message de réponse du service.

12. Système de traitement d'événements (1) selon la revendication 11, dans lequel au moins certains des services de réseau ont un état non authentifié et un état authentifié, et le contenu comprend des données indiquant que le service de réseau demandé se trouve dans un état non authentifié.

13. Système de traitement d'événements (1) selon l'une quelconque des revendications précédentes, dans lequel au moins l'un des noeuds de service est associé à une pluralité des premiers ou seconds noeuds d'accès radio (4 ou 14a ; 14b).

14. Système de traitement d'événements (1) selon l'une quelconque des revendications précédentes, dans lequel au moins l'un des noeuds de service (10 ; 44) est associé au premier noeud d'accès radio (4) et au second noeud d'accès radio (14a ; 14b).

15. Appareil de traitement d'événements (30) d'un système de traitement d'événements selon l'une quelconque des revendications précédentes.

16. Procédé de contrôle de la fourniture de services de réseau dans un système de traitement d'événements, le système de traitement d'événements comprenant un appareil de traitement d'événements fournissant une fonction d'interaction de services, SIF (30), un premier noeud d'accès radio (4), un second noeud d'accès radio (14a ; 14b) et un noeud de desserte (8) pouvant fonctionner pour transmettre des données vers et depuis le premier noeud d'accès radio (4) et vers et depuis le second noeud d'accès radio (14a ; 14b), le noeud de service (8) étant un centre de commutation mobile d'un réseau central associé à un réseau sous licence, le premier noeud d'accès radio (4) étant associé à un premier réseau sous licence (13) et le second noeud d'accès radio (14a ; 14b) étant associé à un second réseau sans licence (15a ; 15b), différent dudit premier réseau, l'appareil de traitement d'événements pouvant être connecté au noeud de desserte et à une pluralité de noeuds de service (10 ; 44) à partir desquels un abonné peut recevoir un service pendant le traitement d'un événement de réseau, les noeuds de service (10 ; 44) étant associés à l'un des premier ou second noeuds d'accès radio (4, 14a ; 14b) et dans lequel la SIF est configurée pour coopérer avec une base de données configurée pour stocker une liste de services et les relations entre ceux-ci en termes de traitement des événements de réseau pour tous les abonnés du réseau central,
dans lequel le procédé comprend, lors de la réception d'un message de demande de lancement du service depuis le noeud de desserte (8) émanant d'un réseau actuellement impliqué dans le traitement dudit événement de réseau, les étapes suivantes effectuées par l'appareil de traitement d'événements :
identifier le noeud d'accès radio (14a ; 14b) impliqué dans l'événement de réseau ; et
choisir au moins certains noeuds de ladite pluralité de noeuds de service (10 ; 44) pour participer à la fourniture du service demandé en fonction du noeud d'accès radio identifié (14a ; 14b), de manière à traiter l'événement de réseau.

17. Procédé selon la revendication 16, comprenant l'étape consistant à déterminer un identifiant de localisation à partir du message de demande de lancement du service, de manière à identifier le noeud d'accès radio (14a ; 14b) impliqué dans l'événement de réseau.

18. Procédé selon la revendication 16 ou la revendication 17, comprenant l'étape consistant à envoyer un message de demande de service aux noeuds de service sélectionnés (10 ; 44), au moins un tel message de demande de service comprenant des données indiquant un ou plusieurs déclencheurs de lancement du service correspondant à ladite première demande de lancement du service.

19. Procédé selon l'une quelconque des revendications 16 à 18, comprenant les étapes consistant à surveiller les messages de réponse du service en provenance des noeuds de service sélectionnés (10 ; 44), et traiter l'événement de réseau sur la base du contenu des messages de réponse du service.

20. Procédé selon la revendication 19, dans lequel au moins certains des services de réseau ont un état non authentifié et un état authentifié, le procédé comprenant l'étape consistant à analyser ledit contenu pour rechercher des données indiquant que le service de réseau demandé se trouve dans un état authentifié par rapport à un noeud de service sélectionné donné (10 ; 44), et, en réponse à cette étape, exclure ledit noeud de service sélectionné (10 ; 44) de l'événement de réseau demandé.
